# FASCICULE DE BREVET EUROPEEN

(11) **EP 3 235 110 B1**
(45) Date de publication et mention de la délivrance du brevet: **29.04.2020**
(21) Numéro de dépôt: 15821051.8
(22) Date de dépôt: 18.12.2015
(51) Int. Cl.: H02K 9/06, H02K 9/14

(54) **MACHINE ELECTRIQUE REFROIDIE PAR TURBINE**
LÜFTERGEKÜHLTE ELEKTRISCHE MASCHINE
ELECTRIC MACHINE COOLED BY AIR BLOWER

(30) Priorité: 18.12.2014 FR 1462732
(43) Date de publication de la demande: 25.10.2017
(73) Titulaire: Moteurs Leroy-Somer, 16915 Angouleme Cedex 9 (FR)
(72) Inventeur: MATTA, Pierre, 16000 Angouleme (FR)
(74) Mandataire: Nony
(86) Numéro de dépôt international: PCT/EP2015/080427
(87) Numéro de publication internationale: WO 2016/097262

(56) Documents cités:
- WO-A1-97/41630
- DE-A1- 4 446 110
- US-A- 6 023 112
- US-B1- 7 091 635

## Description

La présente invention concerne le refroidissement des machines électriques tournantes, et plus particulièrement mais non exclusivement celui des alternateurs.

Pratiquement tous les alternateurs industriels sont refroidis à l'air par un ventilateur monté à l'avant de la machine et entrainé en rotation par la partie tournante via l'arbre.

L'air est aspiré à l'arrière de la machine et le débit d'air traversant la partie active de la machine permet l'évacuation des calories.

On distingue essentiellement deux types de ventilateurs sur les alternateurs industriels :
a) les ventilateurs à simple voile, caractérisés par un procédé de fabrication relativement simple de moulage sans noyau. En revanche, ce type de ventilateur présente l'inconvénient d'avoir un plus faible débit d'air par rapport à un ventilateur à double voile, mais aussi d'avoir une grande puissance absorbée, ce qui engendre une réduction du rendement de la machine. En effet, l'absence du voile avant du ventilateur perturbe le flux d'air et génère une zone de turbulence à l'avant de la machine, qui réduit l'efficacité thermique du ventilateur ;
b) les ventilateurs à double voile, qui assurent un débit d'air plus grand à iso diamètre et iso largeur de pales, et garantissent également une puissance absorbée bien inférieure à celle des ventilateurs à simple voile. En revanche, la fabrication de ce type de ventilateur nécessite des noyaux de moule à géométrie plus ou moins compliquée.

Sur une gamme d'alternateurs, caractérisée par un même type de tôlerie électromagnétique, la longueur de fer varie en fonction de la puissance des machines afin de couvrir un large éventail de puissances et optimiser l'alternateur en fonction du groupe électrogène associé.

Cependant, sur une gamme de machines donnée, le débit d'air nécessaire pour refroidir chaque machine peut varier en fonction des caractéristiques électriques et de la puissance demandée.

Cela signifie que, pour la même gamme de machines, plusieurs types et/ou tailles de ventilateurs sont demandés afin d'assurer le refroidissement optimal de la partie active et de garantir le respect des normes.

Ainsi, on se retrouve généralement avec deux possibilités qui sont, toutes les deux, non optimisées.

La première possibilité consiste à uniformiser un ventilateur par gamme. Dans ce cas, le ventilateur est dimensionné pour répondre au besoin de la machine de la gamme la plus contraignante en termes d'échauffement, et qui est généralement la machine la plus puissante. En revanche, les machines de plus faible puissance se retrouvent avec un ventilateur surdimensionné, qui génère une puissance absorbée relativement grande par rapport à la puissance de la machine, et cela dégrade le rendement de la machine.

La deuxième possibilité est la création de plusieurs ventilateurs pour la même gamme de machines. Dans ce cas, le ventilateur est bien dimensionné en fonction de la puissance électrique de la machine et ainsi les machines ont un meilleur comportement en termes de débit d'air, de refroidissement et de rendement. Cependant, ce choix complexifie énormément la conception et le processus d'industrialisation, d'autant plus si le choix d'un ventilateur à double voile, coûteux à mouler, est retenu.

L'invention vise à remédier à ces inconvénients, et elle y parvient grâce à une machine électrique comportant un rotor refroidi par un ventilateur de base à simple voile, comportant de préférence des pales monobloc avec le voile, et un booster rapporté sur le ventilateur simple voile, ce booster comportant de préférence un voile se positionnant en regard de celui du ventilateur de base.

Le booster constitue une pièce additionnelle que l'on peut fixer sur le ventilateur de base à simple voile, pour amplifier l'efficacité de celui-ci et lui donner de meilleures performances. Le booster peut venir se centrer sur une zone dédiée du ventilateur de base, se verrouiller à l'arrière des pales et se fixer sur la face avant du ventilateur de base.

On désigne par turbine de refroidissement, ou encore turbine, l'assemblage formé par le ventilateur de base et le booster.

Un intérêt de l'invention est que le ventilateur de base peut être étudié et optimisé pour les machines les moins puissantes. Cela permet d'éviter d'avoir des ventilateurs surdimensionnés au sein d'une gamme de machines et l'invention offre par conséquent non seulement une amélioration des performances et du rendement des machines, mais aussi un gain sur la taille et le poids des machines.

En effet, c'est le booster qui assure l'augmentation des performances du ventilateur de base, en modifiant la forme aérodynamique des pales de la turbine (diamètre, largeur, inclinaison, etc.) pour couvrir le besoin des machines les plus puissantes, tout en apportant les avantages d'une turbine à double voile, et la simplicité d'une fabrication à simple voile.

La meilleure puissance dissipée conduit à un meilleur rendement de la machine, et le plus grand débit d'air à un meilleur refroidissement de celle-ci.

Enfin, la rapidité de montage conduit à une simplification du processus de fabrication.

Ainsi, la solution proposée permet d'avoir une solution hybride entre les deux types de conception habituellement rencontrés, pour obtenir les meilleures performances aérauliques et électriques avec une structure mécanique simple et surtout un système d'assemblage rapide apportant une facilité d'industrialisation.

Un ou plusieurs boosters différents peuvent couvrir les besoins d'une gamme complète d'alternateurs.

Le booster peut comporter des extensions de pales positionnées radialement dans le prolongement des pales du ventilateur de base. Il est ainsi possible d'accroître la longueur des pales et de leur donner la forme la plus appropriée sur le plan aérodynamique.

Les extensions de pales peuvent ainsi être positionnées radialement au-delà du voile du ventilateur de base.

Les extensions des pales sont de préférence monobloc avec le voile du booster.

Le ventilateur de base peut être en métal ou en plastique, de préférence en métal, notamment en aluminium.

Les extensions de pales peuvent être agencées pour s'accrocher mécaniquement aux pales, notamment sur le bord arrière. Dans un exemple de mise en œuvre de l'invention, les pales comportent chacune une encoche et les extensions de pales un crochet correspondant.

Les extensions de pales peuvent recouvrir les parties d'extrémité des pales, sur la majorité de la hauteur des pales.

Les extensions de pales peuvent présenter des décrochements et les pales peuvent se positionner dans l'épaisseur de ces décrochements.

Les extensions de pales peuvent se prolonger vers le centre par une nervure dont la hauteur diminue en rapprochement du centre.

L'invention a encore pour objet une machine électrique équipée d'un ventilateur de base selon l'invention, adapté au montage sur celui-ci d'un booster.

Le ventilateur de base peut comporter ainsi des moyens d'accrochage mécanique du booster à l'avant et/ou à l'arrière, notamment des encoches sur le bord arrière des pales comme mentionné plus haut.

L'invention a encore pour objet un booster destiné à être fixé sur un ventilateur de base selon l'invention, comportant des extensions de pales et/ou un voile avant, notamment tels que définis plus haut.

Ce booster peut comporter des moyens d'accrochage mécanique à l'avant et/ou l'arrière du ventilateur de base, notamment des crochets destinés à s'engager dans des encoches du ventilateur de base.

L'invention a encore pour objet une gamme de machines électriques, comportant :
- Une première machine comportant un rotor refroidi par un ventilateur de base, de préférence à simple voile, comportant des pales de préférence monobloc avec le voile, sans booster,
- Une deuxième machine, notamment plus puissante que la première, comportant un rotor refroidi par un ventilateur de base, identique à celui de la première machine, et un booster rapporté sur ce ventilateur, ce booster comportant de préférence un voile se positionnant en regard de celui du ventilateur de base.

La gamme de machines peut comporter une troisième machine, comportant un rotor refroidi par un ventilateur de base, identique à celui des première et deuxième machines, et un booster rapporté sur ce ventilateur, ce booster comportant de préférence un voile se positionnant en regard de celui du ventilateur de base, ce booster étant différent de celui de la deuxième machine.

L'invention concerne encore un procédé pour accroître la puissance de refroidissement d'un ventilateur de base, de préférence à simple voile, de refroidissement de machine électrique, comportant l'étape consistant à fixer sur le ventilateur un booster, comportant de préférence un voile venant se positionner en regard de celui du ventilateur de base.

Lorsque la machine électrique à laquelle l'invention est appliquée est un alternateur, celui-ci est généralement entrainé par un moteur à combustion interne qui délivre une puissance mécanique au travers d'une vitesse de rotation et d'un couple. Pour des applications standards, la vitesse de rotation est de 1500 tr/min ou 1800tr/min. La turbine formée de l'assemblage du ventilateur de base et du booster est soumise à une force centrifuge proportionnelle à son inertie et au carré de la vitesse de rotation, qui a tendance à déformer radialement le booster. En plus, si l'on considère le sens de rotation comme référence, le couple moyen délivré par le moteur est globalement positif Mais en fait, de par leur principe de fonctionnement (n explosions par tour), ces moteurs délivrent un couple cyclique d'intensité variable sur des périodes de temps très courtes. Cela conduit à avoir une succession de très brèves accélérations et décélérations. De plus, l'inertie de rotation du rotor de l'alternateur est relativement importante, et lors de la phase d'arrêt du moteur, l'énergie cinétique du rotor génère un couple qui tend à déformer angulairement le booster.

Un assemblage mécanique à l'avant et à l'arrière du ventilateur de base ainsi qu'un recouvrement partiel des pales et extensions de pales permettent d'assurer une très bonne résistance à ces sollicitations mécaniques.

L'assemblage à l'arrière est de préférence assuré par coopération de formes, notamment par encoches et crochets, comme mentionné plus haut.

L'assemblage à l'avant peut être assuré par des vis qui traversent le booster, prennent appui sur sa face avant, et viennent en prise dans le ventilateur de base.

Le booster est de préférence agencé pour être plus efficace dans un sens de rotation, de préférence le sens horaire, les moteurs industriels destinés à ce type d'application tournant généralement tous dans le même sens. L'assemblage à l'arrière du ventilateur de base peut être effectué par un mouvement de rotation anti-horaire du booster relativement au ventilateur de base.

L'invention pourra être mieux comprise à la lecture de la description détaillée qui va suivre, d'un exemple non limitatif de mise en œuvre de celle-ci, et à l'examen du dessin annexé, sur lequel :
- la figure 1 représente isolément, en perspective, un exemple de turbine de refroidissement, constituée d'un ventilateur de base et d'un booster, selon l'invention,
- la figure 2 représente isolément le booster de la turbine de la figure 1,
- les figures 3 et 4 sont deux vues avec coupe axiale de la turbine de la figure 1, et
- la figure 5 illustre l'assemblage du booster sur le ventilateur de base.

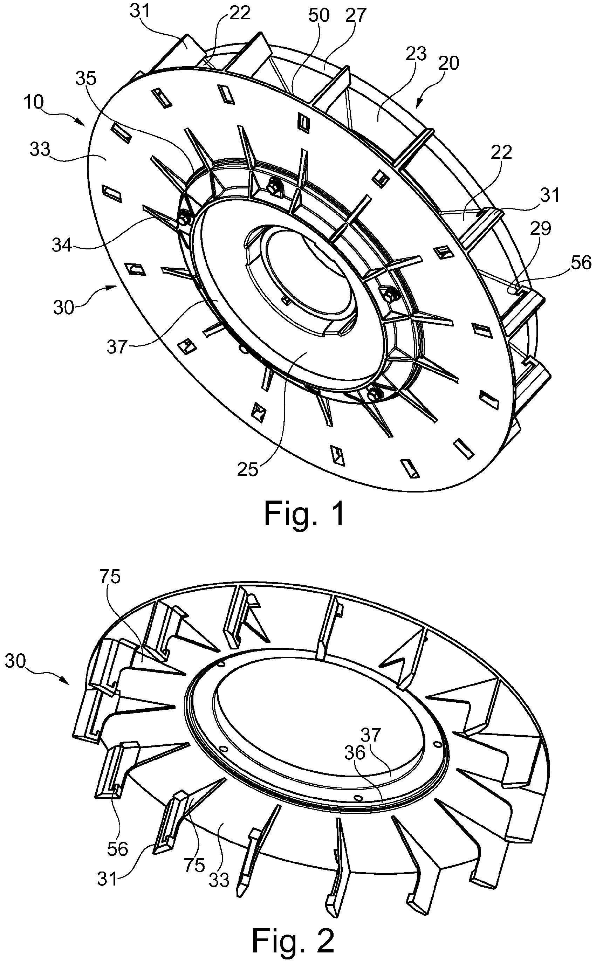

On a représenté à la figure 1 une turbine 10 selon l'invention, servant au refroidissement d'une machine électrique.

La turbine 10 comporte un ventilateur de base 20 sur lequel est fixé un booster 30, que l'on a représenté isolément à la figure 2.

Cette turbine 10 est entraînée en rotation autour d'un axe X par le rotor de la machine, lequel n'a pas été représenté dans un souci de clarté du dessin.

La machine électrique est par exemple un moteur ou un alternateur.

Le rotor peut être de tout type, à aimants permanents ou non.

Le rotor, dans le cas d'un alternateur, peut comporter un inducteur de machine principale et un induit d'excitatrice.

Le rotor peut entraîner en rotation une seule turbine de refroidissement telle qu'illustrée à la figure 1, ou plusieurs turbines, par exemple disposées chacune à une extrémité du rotor.

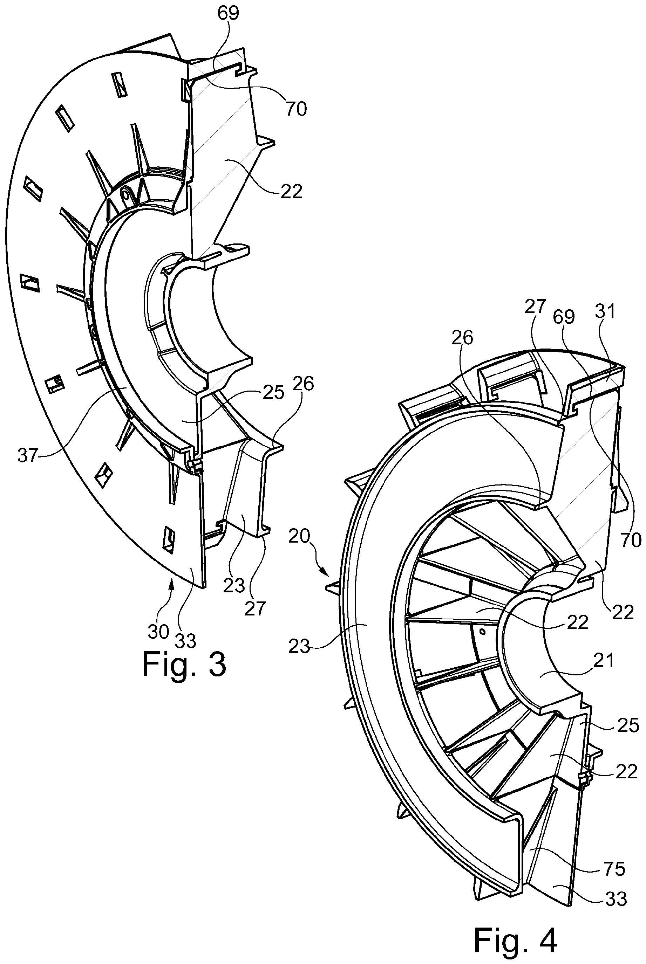

Le ventilateur de base 20 comporte, comme on peut le voir notamment sur les figures 3 à 5, un moyeu 21, qui permet la fixation du ventilateur de base 20 sur l'arbre du rotor, et une pluralité de pales 22 qui s'étendent vers la périphérie externe du ventilateur de base depuis le moyeu 21. Les pales 22 sont reliées entre elles par un voile arrière 23, de forme générale annulaire.

Le moyeu 21 est prolongé à son extrémité avant, opposée au voile arrière 23, par un disque avant 25 qui relie les pales 22 dans leur région adjacente au moyeu 21.

On voit plus particulièrement sur la figure 4 que les pales 22 peuvent présenter une hauteur qui croît sur leur région raccordée au disque avant 25. Les pales 22 atteignent une hauteur maximale sensiblement au niveau d'une nervure annulaire 26 du voile 23, qui fait saillie vers l'arrière sur le ventilateur 20, du côté opposé au disque avant 25. La hauteur des pales 22 diminue ensuite légèrement jusqu'à une deuxième nervure annulaire 27 du voile 23, concentrique à la première et radialement plus extérieure.

Le booster 30 comporte des extensions de pales 31 qui sont disposées sur celui-ci de façon à venir chacune dans le prolongement, radialement vers l'extérieur, d'une pale correspondante 22 du ventilateur 20.

Les extensions 31 se raccordent à un voile avant 33, qui comporte sur sa face opposée aux extensions 31 deux séries 34, 35 de nervures de rigidification, s'étendant chacune radialement. Les nervures 34 sont reliées entre elles par une première nervure annulaire 36 et les nervures 35 par une deuxième nervure annulaire 37, concentrique à la première. La hauteur des nervures 34, 35 croît en rapprochement du centre et de la nervure annulaire à laquelle elles se raccordent.

Le voile avant 33 comporte également des ouvertures 38 qui permettent le passage d'éléments de moule nécessaires à la réalisation du booster 30 d'une seule pièce par moulage de matière thermoplastique, notamment du polyamide.

Le voile avant 33 porte également des plots 39 qui sont traversés par des trous de passage de vis 50 servant à la fixation du booster 30 sur le ventilateur de base 20. Ces vis 50 se fixent dans des taraudages correspondants 51 du disque 25, prévus sur des plots 59.

Dans l'exemple illustré, le ventilateur de base 20 est réalisé de façon monolithique en métal, notamment en aluminium ou en un alliage d'aluminium, par moulage et/ou usinage.

De préférence, comme illustré, les pales 22 et les extensions 31 sont réalisées de façon à coopérer mécaniquement et à accroître l'accrochage mécanique entre le ventilateur de base 20 et le booster 30. Plus particulièrement, les pales 22 peuvent être réalisées avec, sur une portion d'extrémité 28 s'étendant radialement au-delà du voile 23, une encoche 29, ouverte sur le bord arrière opposé au disque avant 25.

Les extensions 31 sont réalisées chacune avec un renfoncement 55 qui présente une forme sensiblement complémentaire de la portion d'extrémité 28 pourvue de l'encoche 29, de façon à réaliser l'accrochage mécanique recherché. Par exemple, comme illustré, les extensions 31 sont réalisées chacune avec un crochet 56 qui s'engage dans l'encoche 29, lorsque le booster 30 est assemblé sur le ventilateur de base 20, comme illustré à la figure 1. Le renfoncement 55 définit un décrochement 69 en regard duquel se positionne le bord d'extrémité 70 d'une pale 22.

Le diamètre de la nervure annulaire 37 est légèrement inférieur à celui du disque avant 25, et ce dernier peut être réalisé avec en périphérie une nervure annulaire 58 adjacente aux plots 59 de réception des vis 50.

Les extensions 31 sont prolongées vers le centre du booster par des nervures radiales 75 dont la hauteur décroît vers le centre.

Ces nervures 75 se superposent chacune à une pale 22 correspondante, comme on peut le voir notamment à la figure 4.

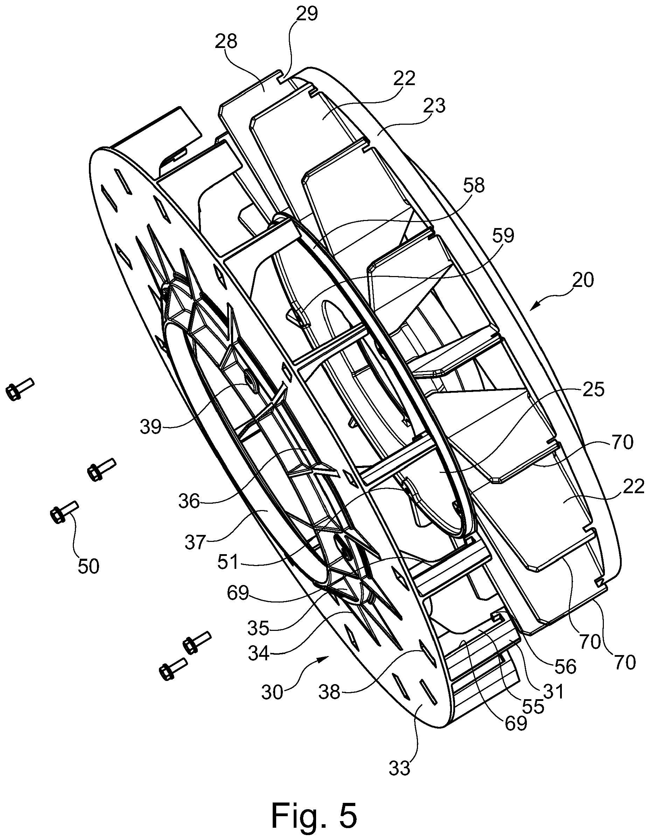

Pour assembler le booster 30 sur le ventilateur de base 20, l'opérateur peut dans un premier temps, comme illustré à la figure 5, rapprocher axialement le booster 30 du ventilateur de base 20, le ventilateur de base ayant son disque avant 25 tourné vers le booster 30 et ce dernier ayant les extensions 31 tournées vers le ventilateur de base 20.

Les extensions 31 sont amenées à hauteur des régions d'extrémité 28 des pales 22, puis le booster 30 est entraîné en rotation autour de l'axe X relativement au ventilateur de base 20, dans le sens anti-horaire dans l'exemple considéré, de façon à engager les crochets 56 dans les encoches 29 et obtenir l'assemblage illustré à la figure 1.

Les vis 50 peuvent être ensuite introduites à travers les plots 39 et vissées dans les taraudages 51, pour assurer la fixation définitive du booster 30 sur le ventilateur de base 20.

L'invention permet d'équiper ou non, selon les besoins de refroidissement, des machines électriques déjà pourvues du ventilateur de base 20.

Ainsi, selon les besoins de refroidissement d'une gamme de machines toutes équipées du même ventilateur de base 20, on peut assembler des boosters 30 sur une partie seulement des ventilateurs de base 20 de ces machines, de façon à apporter une puissance de refroidissement supplémentaire.

Bien entendu, l'invention n'est pas limitée à l'exemple qui vient d'être décrit.

On peut par exemple modifier la forme du ventilateur de base 20, et notamment la forme et l'orientation des pales 22 ainsi que la forme du voile arrière 23 ou du disque avant 25.

De même, on peut modifier la forme des extensions de pales 31 ainsi que la forme du voile avant 33 auquel celles-ci se raccordent, en fonction notamment du débit d'air recherché.

L'accrochage mécanique des extensions 31 sur les pales 22 peut se faire autrement qu'avec une coopération de type crochet et encoche telle qu'illustrée, par exemple par un assemblage par encliquetage ou serrage.

Il peut ainsi y avoir une multitude de formes de pales, notamment droites, inclinées ou courbées, de systèmes de verrouillage ou d'encliquetage à l'arrière des pales du ventilateur de base et au niveau de la fixation sur la face avant.

L'expression "comportant un" doit être comprise comme étant synonyme de "comprenant au moins un", sauf si le contraire est spécifié.

## Revendications

1. Machine électrique comportant un rotor refroidi par un ventilateur de base (20) simple voile (23) comportant des pales (22) de préférence monobloc avec le voile (23), et un booster (30) rapporté sur le ventilateur simple voile, ce booster (30) comportant de préférence un voile (33) se positionnant en regard de celui du ventilateur de base (20), le booster (30) comportant des extensions de pales (31) positionnées radialement dans le prolongement des pales (22) du ventilateur de base (20), **caractérisé en ce que** les extensions de pales (31) présentent des décrochements (69) et les pales (22) se positionnent dans l'épaisseur de ces décrochements (69) et les extensions de pales (31) se prolongent chacune vers le centre par une nervure radiale (75) se superposant à une pale (22) correspondante et dont la hauteur diminue en se rapprochant du centre.

2. Machine selon la revendication 1, les extensions de pales (31) étant monobloc avec le voile (33) du booster (30).

3. Machine selon l'une quelconque des revendications précédentes, le ventilateur de base (20) étant en métal.

4. Machine selon l'une quelconque des revendications précédentes, le booster (30) étant en matière plastique.

5. Machine selon la revendication 1 ou 2, les extensions de pales (31) étant agencées pour s'accrocher mécaniquement aux pales (22).

6. Machine selon l'une quelconque des revendications 1, 2 et 5, les pales (22) comportant chacune une encoche (29) et les extensions de pales (31) un crochet (56) correspondant.

7. Machine selon l'une quelconque des revendications 1, 2, 5 et 6, les extensions de pales (31) recouvrant les parties d'extrémités (28) des pales sur la majorité de la hauteur des pales (22).

8. Procédé pour accroître la puissance de refroidissement d'un ventilateur de base (20), de préférence à simple voile, d'une machine électrique, comportant l'étape consistant à fixer sur le ventilateur (20) un booster (30) comportant de préférence un voile (33) venant se positionner en regard de celui du ventilateur de base (20) afin de former une machine électrique selon l'une quelconque des revendications 1 à 7.

9. Machine électrique équipée d'un ventilateur de base (20) adapté au montage sur celui-ci d'un booster (30) afin de former une machine électrique selon la revendication 1, comportant des moyens d'accrochage mécanique du booster à l'avant et/ou à l'arrière, sous forme d'encoches (29) sur le bord arrière des pales (22).

10. Booster (30) destiné à être monté sur un ventilateur de base (20) d'une machine électrique afin de former une machine électrique selon la revendication 1, comportant des extensions de pale (31) et un voile avant (33).

## Patentansprüche

1. Elektrische Maschine, umfassend einen Rotor, der von einem Grundgebläse (20) mit einzelner Scheibe (23) gekühlt wird, das Flügel (22) umfasst, die bevorzugt einstückig mit der Scheibe (23) sind, und einen Booster (30), der an das Einscheibengebläse angesetzt ist, wobei dieser Booster (30) bevorzugt eine Scheibe (33) umfasst, die sich gegenüber der des Grundgebläses (20) positioniert, wobei der Booster (30) Flügelerweiterungen (31) umfasst, die radial in der Verlängerung der Flügel (22) des Grundgebläses (20) positioniert sind, **dadurch gekennzeichnet, dass** die Flügelerweiterungen (31) Absätze (69) aufweisen und die Flügel (22) sich in der Dicke dieser Absätze (69) positionieren und die Flügelerweiterungen (31) sich jeweils zum Mittelpunkt hin durch eine radiale Rippe (75) verlängern, die einen entsprechenden Flügel (22) überlagert und deren Höhe zum Mittelpunkt hin abnimmt.

2. Maschine nach Anspruch 1, wobei die Flügelerweiterungen (31) einstückig mit der Scheibe (33) des Boosters (30) sind.

3. Maschine nach einem der vorhergehenden Ansprüche, wobei das Grundgebläse (20) aus Metall ist.

4. Maschine nach einem der vorhergehenden Ansprüche, wobei der Booster (30) aus Kunststoff ist.

5. Maschine nach Anspruch 1 oder 2, wobei die Flügelerweiterungen (31) dazu ausgestaltet sind, sich mechanisch in die Flügel (22) einzuhaken.

6. Maschine nach einem der Ansprüche 1, 2 und 5, wobei die Flügel (22) jeweils eine Kerbe (29) und die Flügelerweiterungen (31) einen entsprechenden Haken (56) umfassen.

7. Maschine nach einem der Ansprüche 1, 2, 5 und 6, wobei die Flügelerweiterungen (31) die Endstücke (28) der Flügel über den Großteil der Höhe der Flügel (22) abdecken.

8. Verfahren zur Steigerung der Kühlleistung eines Grundgebläses (20), bevorzugt mit einzelner Scheibe, einer elektrischen Maschine, umfassend den Schritt, der darin besteht, an dem Gebläse (20) einen Booster (30) zu befestigen, der bevorzugt eine Scheibe (33) umfasst, die sich gegenüber der des Grundgebläses (20) positioniert, um eine elektrische Maschine nach einem der Ansprüche 1 bis 7 zu bilden.

9. Elektrische Maschine, die mit einem Grundgebläse (20) ausgestattet ist, das zur Montage eines Boosters (30) an ihm ausgestaltet ist, um eine elektrische Maschine nach Anspruch 1 zu bilden, umfassend Einrichtungen zum mechanischen Einhaken des Boosters an der Vorderseite und/oder an der Rückseite in Form von Kerben (29) an der hinteren Kante der Flügel (22).

10. Booster (30), der dazu bestimmt ist, an einem Grundgebläse (20) einer elektrischen Maschine montiert zu werden, um eine elektrische Maschine nach Anspruch 1 zu bilden, umfassend Flügelerweiterungen (31) und eine vordere Scheibe (33).

## Claims

1. An electric machine including a rotor cooled by a single-plate (23) base ventilator (20) including blades (22) preferably consisting of a single piece with the plate (23), and a booster (30) attached to the single-plate ventilator, this booster (30) preferably including a plate (33) positioned opposite that of the base ventilator (20), wherein the booster (30) includes blade extensions (31) positioned radially as a continuation of the blades (22) of the base ventilator (20), **characterized in that** the blade extensions (31) having indentations (69) and the blades (22) being positioned in the thickness of these indentations (69), and the blade extensions (31) each extending towards the center by a radial rib (75) overlapping a corresponding blade (22), the height of which decreases as it approaches the center.

2. The machine as claimed in claim 1, the blade extensions (31) consisting of a single piece with the plate (33) of the booster (30).

3. The machine as claimed in any one of the preceding claims, the base ventilator (20) being made of metal.

4. The machine as claimed in any one of the preceding claims, the booster (30) being made of plastic.

5. The machine as claimed in claim 1 or 2, the blade extensions (31) being organized to be mechanically hooked to the blades (22).

6. The machine as claimed in any one of claims 1, 2 and 5, the blades (22) each including a notch (29) and the blade extensions (31) each including a corresponding hook (56).

7. The machine as claimed in any one of claims 1, 2, 5 and 6, the blade extensions (31) covering the end parts (28) of the blades over the majority of the height of the blades (22).

8. A method for increasing the cooling power of a base ventilator (20), preferably having a single plate, of an electric machine, including the step of fixing, on the ventilator (20), a booster (30) preferably including a plate (33) positioned opposite that of the base ventilator (20) in order to form an electric machine as claimed in any one of claims 1-7.

9. An electric machine provided with a base ventilator (20) suitable for mounting a booster (30) thereon in order to form an electric machine as claimed in claim 1, including means for mechanically hooking the booster at the front and/or at the back, in the form of notches (29) on the back edge of the blades (22).

10. A booster (30) intended to be mounted on a base ventilator (20) of an electric machine in order to form an electric machine as claimed in claim 1, including blade extensions (31) and a front plate (33).
